# EUROPEAN PATENT SPECIFICATION

(11) **EP 0 519 203 B1**
(45) Date of publication and mention of the grant of the patent: **16.07.1997**
(21) Application number: 92108013.1
(22) Date of filing: 12.05.1992
(51) Int. Cl.: G01N 27/447

(54) **Apparatus and method for electrophoretic separation of proteins**
Vorrichtung und Verfahren zur elektrophoretischen Trennung von Proteinen
Appareil et procédé de séparation électrophorétique des protéines

(30) Priority: 21.06.1991 US 718600
(43) Date of publication of application: 23.12.1992
(73) Proprietor: Hewlett-Packard Company, Palo Alto, California 94304 (US)
(72) Inventor: Swedberg, Sally, Los Altos, CA. 94022 (US); McManigill, Douglas, Palo Alto, CA. 94306 (US)
(74) Representative: Liesegang, Roland, Dr.-Ing.

(56) References cited:
- US-A- 4 931 328
- ANALYTICAL CHEMISTRY vol. 64, no. 5, March 1992, COLUMBUS US pages 512 - 516 M. A. HAYES ET AL : 'Electroosmotic flow control and monitoring with an applied radial voltage for capillary zone electrophoresis'
- ANALYTICAL CHEMISTRY vol. 62, no. 14, July 1990, COLUMBUS US pages 1550 - 1552 C.S. LEE ET AL : 'Direct control of the electroosmosis in capillary zone electrophoresis by using an external electric field'
- JOURNAL OF CHROMATOGRAPHY vol. 516, no. 1, September 1990, AMSTERDAM NL pages 69 - 78 J.K. TOWNS ET AL : 'Polyethyleneimine-bonded phases in the separation of proteins by capillary electrophoresis'

## Description

### Field of the Invention

The present invention generally relates to the separation of proteins and particularly to capillary zone electrophoresis of proteins at a desired pH wherein the electroosmotic flow is controlled by an applied external electric field.

### Background of the Invention

Capillary zone electrophoresis ("CZE") in small capillaries (less than or equal to 75µ) was first demonstrated by Jorgenson and Lukacs, and has proven useful as an efficient method for the separation of small solutes. *J. Chromatog*., 218 (1981), page 209; *Anal. Chem*., 53 (1981), page 1298. The separation process relies upon an electroosmosis effect generally described as the flow of a liquid in contact with a solid surface under the influence of a tangentially applied electric field. Attractive factors for electrophoretic separations by capillary zone electrophoresis are the small sample sizes, little or no sample pretreatment, and the potential for quantification and recovery of biologically active samples.

One of the single greatest disadvantages of capillary zone electrophoresis lies when attempts are made to separate macromolecules such as proteins. Separations of macromolecules by CZE leads to untoward interactions of the biopolymers with the silica capillary wall.

One approach to the problem attendant to CZE separation of proteins was reported in U.S. Patent No. 4,931,328, inventor Swedberg, issued June 5, 1990, which described a modified capillary tube wherein an interfacial layer is covalently bonded to the inner wall of the capillary tube. The interfacial layer is effective to reduce interactions between the inner wall and protein solutes, and includes a hydratable amphoteric phase. This amphoteric phase has a determinable isoelectric point and permits electroosmotic flow control by selection of solution pH.

Lee et al., *Anal. Chem*., 62 (1990), pages 1550-1552, reported a CZE technique in which bare fused silica capillary electroosmosis was controlled by using an external electric field to modify the zeta potential at the aqueous/inner capillary interface.

### Summary of the Invention

It is an object of the present invention to provide a CZE method and apparatus for protein separations in which the protein remains biologically active.

It is another object of the present invention to provide a CZE method and apparatus in which protein is separated at or near the point of zero charge of the capillary inner surface, and in which the electroosmotic flow is controlled by regulating an external electric field across the capillary wall.

Further objects and advantages of the invention will become apparent to those skilled in the art upon examination of the specification and appended claims, as well as in practice of the present invention.

In one aspect of the invention capillary tubes with modified inner surfaces where the interaction phase includes amino groups were prepared. These amino-phase columns had a predetermined point of zero charge. These columns were employed in CZE wherein the pH is adjusted to fall at or close to the predetermined PZC while the magnitude and direction of the electroosmotic flow was controlled by an externally applied electric field.

### Brief Description of the Drawings

Figure 1 is a schematic diagram of a CZE device wherein the electroosmotic flow is controlled by an applied external electric field.

Figure 2 is a graph plotting the absolute value of the electroosmotic mobility versus the applied external potential gradient at pH 3.0.

Figure 3 is a graph plotting the electroosmotic mobility versus the applied external potential gradient at pH 4.0.

Figure 4 is a plot of electrophoretic mobility versus pH.

Figure 5 is a plot of electrophoretic mobility versus external field at a constant pH of 4.0.

Figure 6 is a plot of electrophoretic mobility versus applied external field at a pH of 4.0 with the addition of a surfactant.

Figure 7a illustrates an electrotherogram of a protein mixture with no external control.

Figure 7b illustrates an electrotherogram with the application of an external electric field.

### Detailed Description of the Preferred Embodiments

The point of zero charge (PZC) is generally defined as the pH at which the net charge of a surface is zero. As described in U.S. Patent No. 4,931,328, a capillary tube can be modified so that an interfacial layer is covalently bonded to the inner wall of the capillary tube. The interfacial layer, which helps minimize interactions between the inner wall and proteins, includes a hydratable amphoteric phase. The amphoteric phase has a determinable isoelectric point. Thus, the amphoteric phase can provide a variety of surfaces with unique PZC characteristics.

Lee et al., *Anal. Chem*., 62 (1990), pages 1550-1552, demonstrated direct control of electroosmotic flow in capillary electrophoresis by using an additional electric field applied from outside the separation capillary. This technique vectorially couples the externally applied potential with the potential across the buffer solution inside the capillary. It is believed that this electric potential gradient across the capillary wall controls the polarity and magnitude of the zeta potential on the interior surface of the capillary wall. The direction and flow rate of electroosmosis is dependent upon the polarity and magnitude of the zeta potential. The electroosmosis in a bare fused silica capillary electrophoresis at the solution condition of 1 mM phosphate buffer at pH 5 were directly controlled by simply varying the external electric potential.

The present invention is based in part on utilizing an interfacial layer coated on the inner surface of a capillary tube to adjust the PZC of the capillary surface to fall at any desired pH. The layer can be chemically bonded or highly physisorbed to the capillary bore; the layer is stable under capillary separation conditions. The interfacial layer can comprise a hydratable amphoteric phase or an ionizable species having a basic or an acidic equilibrium. The modified capillary tube can be employed in CZE wherein the pH is adjusted to fall at or close to the predetermined PZC of the modified surface while the magnitude and direction of the electroosmotic flow ("EOF") is controlled by an externally applied electric field.

The present invention is particularly suited for protein separations, since protein conformation (and function) is very sensitive to pH. For protein separations, it is desirable to choose specific pH conditions under which the separations will be done. In addition, control of the EOF is required for optimizing the resolution of components being separated.

### Experimental

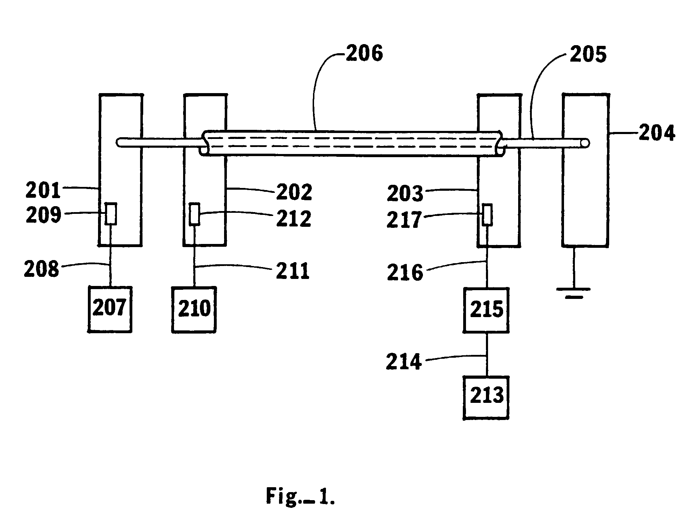

A capillary tube with a modified inner surface where the interaction phase includes amino groups (referred to herein as amino-phase columns and illustrating an ionizable species embodiment of the invention) was prepared as described in U.S. Patents 4,931,328 and 5,006,313, inventor Swedberg, issued June 5, 1990, and April 9, 1991, respectively, by pumping 0.5% solution of 2 amino propyltriethyoxysilane (pH 4.5) through capillaries for 15 minutes, followed by curing. The amino-phase column was used as the inner capillary 205 of the system as shown in Fig. 1, described herein.

Referring to Fig. 1, a capillary 205 with 50 µm i.d., 150 µm o.d. and 25 cm in length was placed inside the bore of a larger capillary 206 200 µm i.d., 350 µm o.d. and 22 cm in length). The inner (sample) capillary was attached to reservoir 201 and reservoir 204, while the larger (outer) capillary was attached to reservoir 202 and reservoir 203. The reservoirs and outer capillary were filled with buffer. A bipolar high voltage power supply 207 was connected to the buffer in reservoir 201 via line 208 and electrode 209. Upon activation, power supply 207 generates an electric field inside the inner capillary between reservoir 201 and reservoir 204. Similarly, bipolar high voltage power supply 210 was connected to the buffer in reservoir 202 via line 211 and electrode 212. The buffer in reservoir 203 was connected via line 216 and electrode 217 to a selectable resistor ladder 215 that was in turn connected to a bipolar high voltage power supply 213 through line 214. Reservoir 204 was grounded.

For instance, if reservoir 201 is at +10 kV and reservoir 204 is at 0 volts, an axial field of 10 kV is established. After an axial internal electric field is established in the inner (sample) capillary, a uniform radial electric field is created across the interstitial capillary space between the two coaxial capillaries by establishing a potential gradient between reservoirs 202 and 203. The external field can be "positive" or "negative." For example, a uniform axial positive radial external field is established if the potentials at reservoirs 202 and 203 are +15 kV and +5 kV, respectively. This establishes a +5 kV radial field across the interstitial capillary space. On the other hand, if the polarity is changed so that the potentials at reservoirs 202 and 203 are +5 kV and -5 kV, respectively, then a uniform negative radial external field of -5 kV is established.

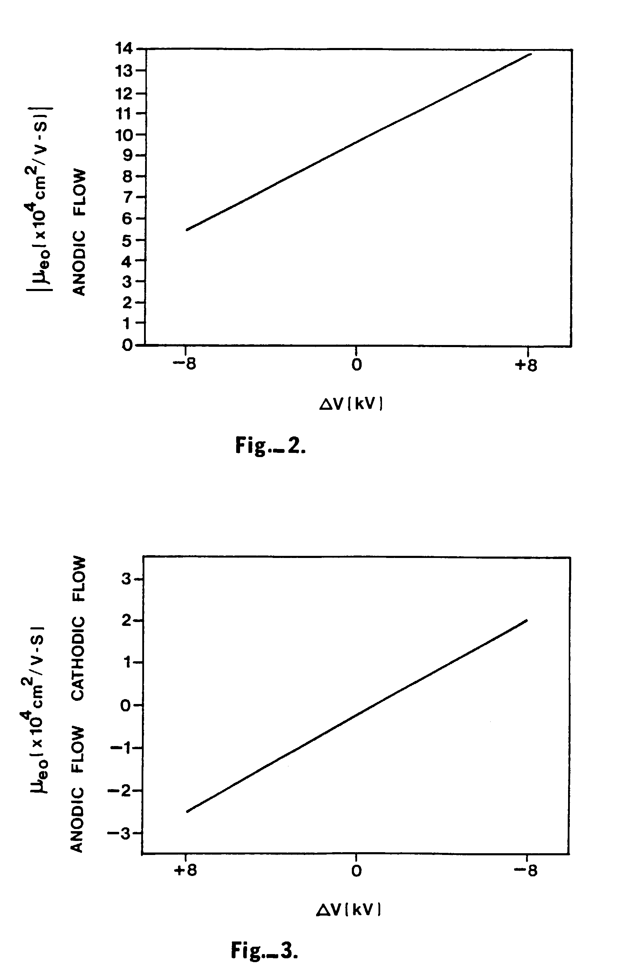

Fig. 2 is a graph plotting the absolute value of the electroosmotic mobility against the applied external potential gradient at pH 3.0 (50 mM citrate). As is apparent, a positive external field increases the EOF, i.e., faster anodic flow. Application of a negative external field slows the EOF, but did not reverse it.

The above experiment was repeated at pH 4.0, one-half pH unit from the PZC of the amino-phase column which was experimentally calculated to be 4.5. Fig. 3 is a plot of the electroosmotic mobility against the applied external potential applied gradient. As is apparent, at a potential of +8 kV, the EOF increased generally, but the negative 8 kV offset reversed the flow direction.

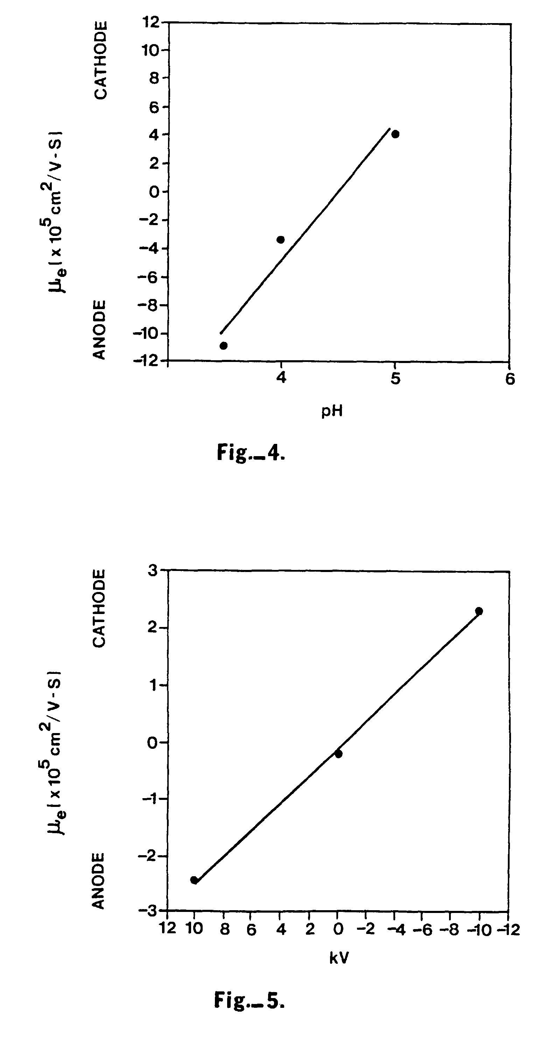

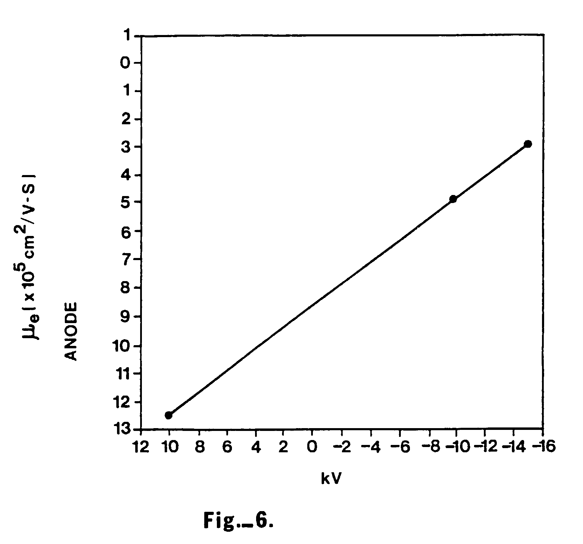

Fig. 4 is a plot of electrophoretic mobility against pH using the amino-phase column. Fig. 5 is a plot of electrophoretic mobility against external field at a constant pH of 4.0 (10 mM citrate buffer). Fig. 6 is a plot of electrophoretic mobility against applied external field at a constant pH of 4.0 with the addition of surfactant (10 mM OAC buffer, CHAPSO).

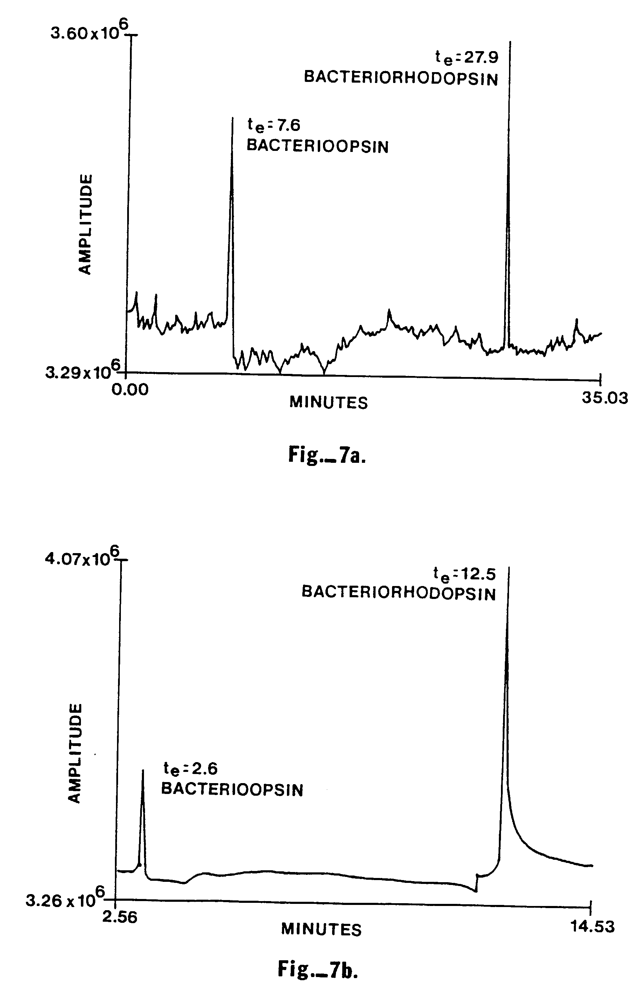

Referring to Fig. 7a, a 50µ amino-phase column was utilized to separate a mixture of bacteriorhodopsin and bacterioopsin at pH 4.0 with no external control, i.e., no external electric field, (93 mm to detector, λ 210, 10 mM OAC, 18.0 mM CHAPSO, 200 V/cm). Fig. 7b refers to the same protein mixture separation under the same conditions but with the application of a +10 kV gradient. The increase in electroosmotic flow from 0.11 mm/sec (Fig. 7a) to 0.25 mm/sec (Fig. 7b) caused the elution times to be decreased in proportion to the increase in EOF.

It is to be understood that while the invention has been described above in conjunction with preferred specific embodiments, the description and examples are intended to illustrate and not limit the scope of the invention, which is defined by the scope of the appended claims.

## Claims

1. An electrophoretic apparatus useful for electrophoretic separations of proteins in solution at a desired pH comprising:
a capillary tube (205) defining an outer capillary wall, an inner capillary wall and a bore, wherein at the inner capillary wall surface there is a chemically bonded or highly physisorbed interfacial layer that is effective to reduce interactions between the inner wall and protein solutes;
means for applying an internal electric field along the bore axis; and
means for applying an external electric field across the outer wall and inner wall.

2. The electrophoretic apparatus as defined in claim 1 wherein the interfacial layer comprises a hydratable amphoteric phase that comprises a protein, a peptide or an ampholyte.

3. The electrophoretic apparatus as defined in claim 1 wherein the interfacial layer includes an ionizable species having an acidic equilibrium or a basic equilibrium.

4. The electrophoretic apparatus as defined in claim 3 wherein the ionizable species is an amino group.

5. The electrophoretic apparatus as defined in claim 3 wherein the ionizable species is a carboxyl group.

6. The electrophoretic apparatus as defined in claim 1 wherein the inner capillary wall surface comprises a highly physisorbed interfacial layer that comprises an amphoteric or zwitterionic surfactant.

7. The electrophoretic apparatus as defined in either claims 2, 3, 4, 5, or 6 wherein the interfacial layer surface has a point of zero charge that is at or near the desired pH of the solution.

8. The electrophoretic apparatus as defined in claim 7 wherein the external electric field permits electroosmotic flow control.

9. An electrophoretic method useful for separating proteins in solution at a desired pH which comprises the steps of:
positioning one end of a capillary tube into a buffer reservoir, wherein the capillary tube defines an outer capillary wall, an inner capillary wall, and a bore, and wherein at the inner capillary wall surface there is a chemically bonded or highly physisorbed interfacial layer that is effective to reduce interactions between the inner wall and protein solutes;
establishing an internal electric field between two points along the capillary bore; and
applying an external electric field across the outer wall and inner wall.

10. The electrophoretic method as defined in claim 9 wherein the interfacial layer comprises a hydratable amphoteric phase that comprises a protein, a peptide or an ampholyte.

11. The electrophoretic method as defined in claim 9 wherein the interfacial layer includes an ionizable species having an acidic equilibrium or a basic equilibrium.

12. The electrophoretic method as defined in claim 11 wherein the ionizable species is an amino group.

13. The electrophoretic method as defined in claim 11 wherein the ionizable species is a carboxyl group.

14. The electrophoretic method as defined in claim 9 wherein the inner capillary wall surface comprises a highly physisorbed interfacial layer that comprises an amphoteric or zwitterionic surfactant.

15. The electrophoretic method as defined in either claims 10, 11, 12, 13, or 14 wherein the interfacial layer surface has a point of zero charge that is at or near the desired pH of the solution.

16. The electrophoretic method as defined in claim 15 further comprising the step of controlling electroosmotic flow by adjusting the external electric field.

## Patentansprüche

1. Elektrophoretische Vorrichtung für die elektrophoretische Trennung von Proteinen in einer Lösung bei einem gewünschten pH-Wert, mit:
einem Kapillarrohr (205), welches eine Kapillaraußenwand, eine Kapillarinnenwand und eine Bohrung definiert, wobei an der Oberfläche der Kapillarinnenwand eine chemisch verbundene oder physikalisch hoch adsorbierte Grenzflächenschicht ist, welche die Wechselwirkungen zwischen der Innenwand und gelösten Proteinen vermindern kann;
einer Vorrichtung zum Anlegen eines internen elektrischen Feldes längs der Achse der Bohrung; und
einer Vorrichtung zum Anlegen eines externen elektrischen Feldes über der Außen- und der Innenwand.

2. Elektrophoretische Vorrichtung nach Anspruch 1, bei der die Grenzflächenschicht eine hydratisierbare amphotere Phase ausweist, welche ein Protein, ein Peptid oder ein Ampholyt umfaßt.

3. Elektrophoretische Vorrichtung nach Anspruch 1, bei der die Grenzflächenschicht eine ionisierbare Spezies mit einem sauren Gleichgewicht oder einem basischen Gleichgewicht aufweist.

4. Elektrophoretische Vorrichtung nach Anspruch 3, bei der die ionisierbare Spezies eine Aminogruppe ist.

5. Elektrophoretische Vorrichtung nach Anspruch 3, bei der die ionisierbare Spezies eine Carboxylgruppe ist.

6. Elektrophoretische Vorrichtung nach Anspruch 1, bei der die Oberfläche der Kapillarinnenwand eine physikalisch hoch absorbierte Grenzflächenschicht aufweist, welche einen amphoteren oder zwitterionischen grenzflächenaktiven Stoff aufweist.

7. Elektrophoretische Vorrichtung nach einem der Ansprüche 2, 3, 4, 5 oder 6, bei der die Oberfläche der Grenzflächenschicht einen Ladungsnullpunkt hat, der bei oder in der Nähe des gewünschten pH-Wertes der Lösung liegt.

8. Elektrophoretische Vorrichtung nach Anspruch 7, bei der das externe elektrische Feld eine elektroosmotische Strömungssteuerung erlaubt.

9. Elektrophoretisches Verfahren zum Trennen von Proteinen in einer Lösung bei einem gewünschten pH-Wert, mit folgenden Verfahrensschritten:
Positionieren eines Endes eines Kapillarrohres in einem Pufferreservoir, wobei das Kapillarrohr eine Kapillaraußenwand, eine Kapillarinnenwand und eine Bohrung definiert, und wobei die Oberfläche der Kapillarinnenwand eine chemisch verbundene oder physikalisch hoch absorbierte Grenzflächenschicht aufweist, welche Wechselwirkungen zwischen der Innenwand und gelösten Proteinen vermindern kann;
Einrichten eines internen elektrischen Feldes zwischen zwei Punkten längs der Kapillarbohrung; und
Anlegen eines externen elektrischen Feldes über der Außenwand und der Innenwand.

10. Elektrophoretisches Verfahren nach Anspruch 9, bei dem die Grenzflächenschicht eine hydratiesierbare amphotere Phase aufweist, die ein Protein, ein Peptid oder ein Ampholyd umfaßt.

11. Elektrophoretisches Verfahren nach Anspruch 9, bei der die Grenzflächenschicht eine ionisierbare Spezies mit einem sauren Gleichgewicht oder einem basischen Gleichgewicht aufweist.

12. Elektrophoretisches Verfahren nach Anspruch 11, bei dem die ionisierbare Spezies eine Aminogruppe ist.

13. Elektrophoretisches Verfahren nach Anspruch 11, bei dem die ionisierbare Spezies eine Carboxylgruppe ist.

14. Elektrophoretisches Verfahren nach Anspruch 9, bei dem die Oberfläche der Kapillarinnenwand eine physikalisch hoch absorbierte Grenzflächenschicht aufweist, welche einen amphoteren oder zwitterionischen grenzflächenaktiven Stoff aufweist.

15. Elektrophoretisches Verfahren nach einem der Ansprüche 10, 11, 12, 13 oder 14, bei dem die Oberfläche der Grenzflächenschicht einen Ladungsnullpunkt hat, der bei oder in der Nähe des gewünschten pH-Wertes der Lösung liegt.

16. Elektrophoretisches Verfahren nach Anspruch 15, bei dem das externe elektrische Feld eine elektroosmotische Strömungssteuerung erlaubt.

## Revendications

1. Appareil électrophorétique utile pour des séparations électrophorétiques de protéines en solution à un pH souhaité comprenant:
- un tube capillaire (205) définissant une paroi capillaire externe, une paroi capillaire interne et un canal, dans lequel à la surface de la paroi capillaire interne, il existe une couche interfaciale hautement physiosorbée ou chimiquement liée qui est efficace pour réduire les interactions entre la paroi interne et les solutés de protéine;
- un moyen pour appliquer un champ électrique interne le long de l'axe du canal; et
- un moyen pour appliquer un champ électrique externe à travers la paroi externe et la paroi interne.

2. Appareil électrophorétique selon la revendication 1, dans lequel la couche interfaciale comprend une phase amphotère pouvant être hydratée qui comprend une protéine, un peptide ou un ampholyte.

3. Appareil électrophorétique selon la revendication 1, dans lequel la couche interfaciale inclut une espèce ionisable ayant un équilibre acide ou un équilibre basique.

4. Appareil électrophorétique selon la revendication 3, dans lequel l'espèce ionisable est un groupement amino.

5. Appareil électrophorétique selon la revendication 3, dans lequel l'espèce ionisable est un groupement carboxyle.

6. Appareil électrophorétique selon la revendication 1, dans lequel la surface de la paroi capillaire interne comprend une couche interfaciale hautement physiosorbée qui comprend un tensio-actif amphotère ou zwittérionique.

7. Appareil électrophorétique selon la revendication 2, 3, 4, 5 ou 6, dans lequel la surface de la couche interfaciale possède un point de charge nulle qui est au pH souhaité de la solution ou proche de celui-ci.

8. Appareil électrophorétique selon la revendication 7, dans lequel le champ électrique externe permet une régulation d'écoulement électroosmotique.

9. Procédé électrophorétique utile pour séparer les protéines en solution à un pH souhaité qui comprend les étapes consistant:
- à positionner une extrémité d'un tube capillaire dans un réservoir tampon, dans lequel le tube capillaire définit une paroi capillaire externe, une paroi capillaire interne, et un canal, et dans lequel à la surface de la paroi capillaire interne, il existe une couche interfaciale hautement physiosorbée ou chimiquement liée qui est efficace pour réduire les interactions entre la paroi interne et les solutés de protéine;
- à établir un champ électrique interne entre deux points le long du canal capillaire; et
- à appliquer un champ électrique externe à travers la paroi externe et la paroi interne.

10. Procédé électrophorétique selon la revendication 9, dans lequel la couche interfaciale comprend une phase amphotère pouvant être hydratée qui comprend une protéine, un peptide ou un ampholyte.

11. Procédé électrophorétique selon la revendication 9, dans lequel la couche interfaciale inclut une espèce ionisable ayant un équilibre acide ou un équilibre basique.

12. Procédé électrophorétique selon la revendication 11, dans lequel l'espèce ionisable est un groupement amino.

13. Procédé électrophorétique selon la revendication 11, dans lequel l'espèce ionisable est un groupement carboxyle.

14. Procédé électrophorétique selon la revendication 9, dans lequel la surface de la paroi capillaire interne comprend une couche interfaciale hautement physiosorbée qui comprend un tensio-actif amphotère ou zwittérionique.

15. Procédé électrophorétique selon la revendication 10, 11, 12, 13 ou 14, dans lequel la surface de la couche interfaciale possède un point de charge nulle qui est au pH souhaité de la solution ou proche de celui-ci.

16. Procédé électrophorétique selon la revendication 15, comprenant de plus l'étape consistant à réguler l'écoulement électroosmotique en ajustant le champ électrique externe.
